Europäisches Patentamt

(19) European Patent Office

Office européen des brevets

(11) Publication number: **0 036 845**
**B1**

(12) **EUROPEAN PATENT SPECIFICATION**

(45) Date of publication of patent specification: **09.11.83**

(51) Int. Cl.³: **B 60 G 7/02, B 60 G 3/06**

(21) Application number: **81830044.4**

(22) Date of filing: **16.03.81**

(54) **Motor vehicle provided with means for the independent suspension of its front wheels.**

(30) Priority: **20.03.80 IT 6742180**

(43) Date of publication of application:
**30.09.81 Bulletin 81/39**

(45) Publication of the grant of the patent:
**09.11.83 Bulletin 83/45**

(84) Designated Contracting States:
**DE FR GB SE**

(56) References cited:
**DE - A - 2 659 081**
**GB - A - 449 455**
**GB - A - 983 048**
**GB - A - 1 404 585**
**US - A - 2 483 974**
**US - A - 2 660 449**
**US - A - 3 584 895**
**US - A - 3 864 989**
**US - A - 4 059 286**
**US - A - 4 184 697**

(73) Proprietor: **FIAT AUTO S.p.A.**
**Corso Giovanni Agnelli 200**
**I-10135 Torino (IT)**

(72) Inventor: **Piritore, Giuseppe**
**Via Cristalliera 32**
**I - 10139 Torino (IT)**

(74) Representative: **Jacobacci, Filippo et al,**
**c/o JACOBACCI-CASETTA & PERANI S.p.A. Via**
**Alfieri 17**
**I-10121 Torino (IT)**

Courier Press, Leamington Spa, England.

## Motor vehicle provided with means for the independent suspension of its front wheels

The present invention relates to motor vehicles provided with a known independent suspension means for its front wheels, including:

— a cross member fixed at its centre to the front part of the vehicle body and having an enlarged head at each end;
— a pair of bearing fixed to each head by fixing means, each bearing carrying a bush and the two bushes of each pair of bearings being aligned along an axis parallel to the longitudinal axis of the vehicle,
— an arm articulated on each head of the cross member by means of a pin inserted in the corresponding pair of bushes, and
— a pair of resilient, telescopic legs each of which incorporates a shock absorber, each leg being achored at its upper end to the vehicle body and carrying at its lower end a support for the associated wheel, this wheel support being connected by means of a ball joint to the arm which is articulated to the corresponding head of the cross member.

In motor vehicles provided with suspension means of the type indicated above, the vertical and longitudinal stresses transmitted by the wheels to the bush bearings fixed to the heads of the cross member induce flexing forces in the cross member itself about the longitudinal axis of the vehicle. The cross member must therefore be formed and dimensioned so as to enable it to withstand these flexing moments, and usually has a box structure constituted by a channel section closed by a reinforcing wall welded to the edges of the channel.

A structure of this type, as well as being heavy, results in considerable manufacturing complications and high tooling-up costs.

The technical problem which lies at the root of the present invention is that of avoiding the said disadvantages by providing a motor vehicle with suspension means of the type indicated above, in which the cross member carrying the bearings for the bushes is particularly light and may be manufactured simply and economically.

In order to achieve this object, the present invention provides a motor vehicle with suspension means of the type specified above, characterised in that each bearings of said two pairs of bearings is also fixed to the body of the vehicle.

Due to this characteristic the stresses transmitted from the front wheels to the bush bearings are transmitted, in part, directly to the vehicle body and, in part, to the cross member by means of forces which act in the plane of the cross member, itself, whereby the latter is subjected simply to flexing forces about a vertical axis. As a result, the structural strength of the cross member may be provided by a light, open-section, member which can be made simply and economically.

According to a preferred embodiment of the invention, a first bearing of each pair is fixed to an attachment element welded to the body at the lower end of the wheel arch, this fixing being effected by the same fixing means as is used to fix the bearing to the head of the cross member, while the second bearing of each pair has an extension in the form of a vertically-extending arm which is fixed at its upper end to an attachment element welded to the body.

Preferably, the first bearing is in the form of a cradle adapted to receive the associated bush and provided with flanges for fixing it by means of bolts to the associated attachment element, and the second bearing is in the form of an annulus containing its associated bush, the said annulus being welded to a lower, fork-shaped end part of said vertical arm.

Further characteristics of the invention will become clear in the course of the detailed description which follows, with reference to the appended drawings provided purely by way of non-limiting example, in which:

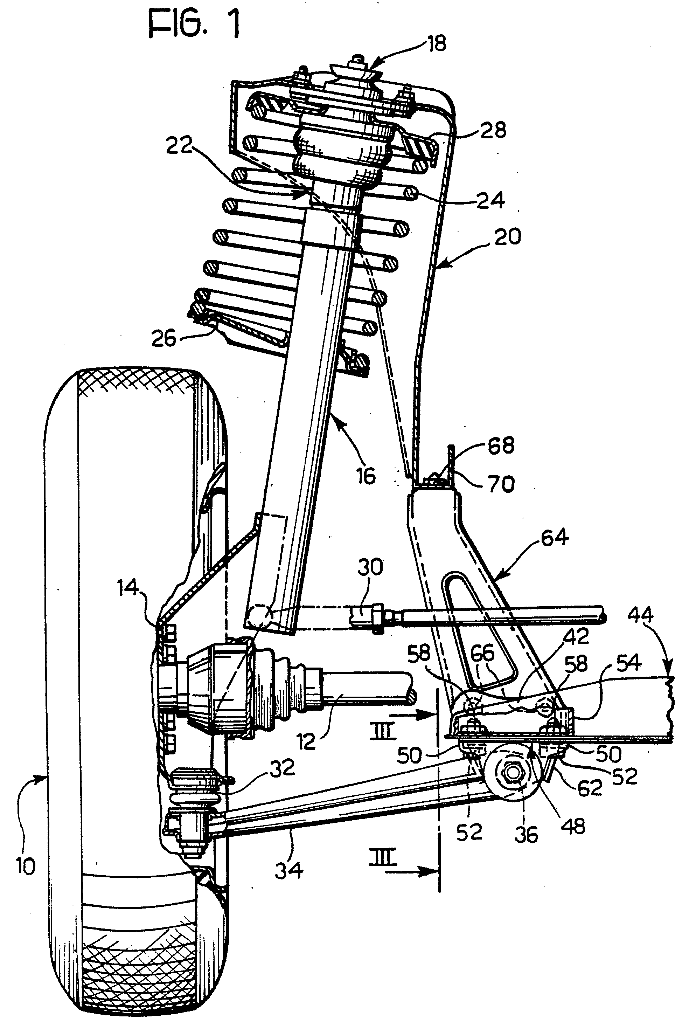

Figure 1 is a front elevational, partially-sectioned view of a motor vehicle according to the invention in the region of suspension of one of its front wheels,

Figure 2 is a schematic perspective view of Figure 1 from which several parts have been omitted for the sake of clarity, and

Figure 3 is a cross-sectional view taken on line III—III of Figure 1.

With reference to the drawings, a front driving wheel of a motor vehicle according to the invention is indicated by 10.

The wheel 10 receives driving torque from the engine of the vehicle through a half-shaft 12 and is supported by means of an attachment member 14 fixed to the lower end of a resilient, telescopic leg 16. The leg 16, which incorporates an hydraulic shock absorber in a manner known *per se,* is anchored at its upper end 18 to the body 20 of the vehicle in correspondence with the upper zone of the wheel arch 22. An helical spring 24 surrounds the upper part of the leg 16 and the ends of the spring 24 bear against two small plates 26, 28 fixed respectively to a movable part and to a fixed part of the leg 16.

The attachment member 14 is articulated in a manner known *per se* by means of a ball joint, not illustrated, to a steering rod 30.

The lower part of the attachment member 14 is articulated by means of a ball joint 32, to the outer end of a box-structure suspension arm 34 the inner end of which is fixed to an articulation pin 36.

The ends of the pin 36 are inserted into a pair of bushes 38, 40 of elastomeric material which are fixed, in the manner described below in the course of the description, to an end head 42 of a cross member 44. The bushes 38, 40 are aligned with each other along an axis parallel to the longitudinal axis of the vehicle.

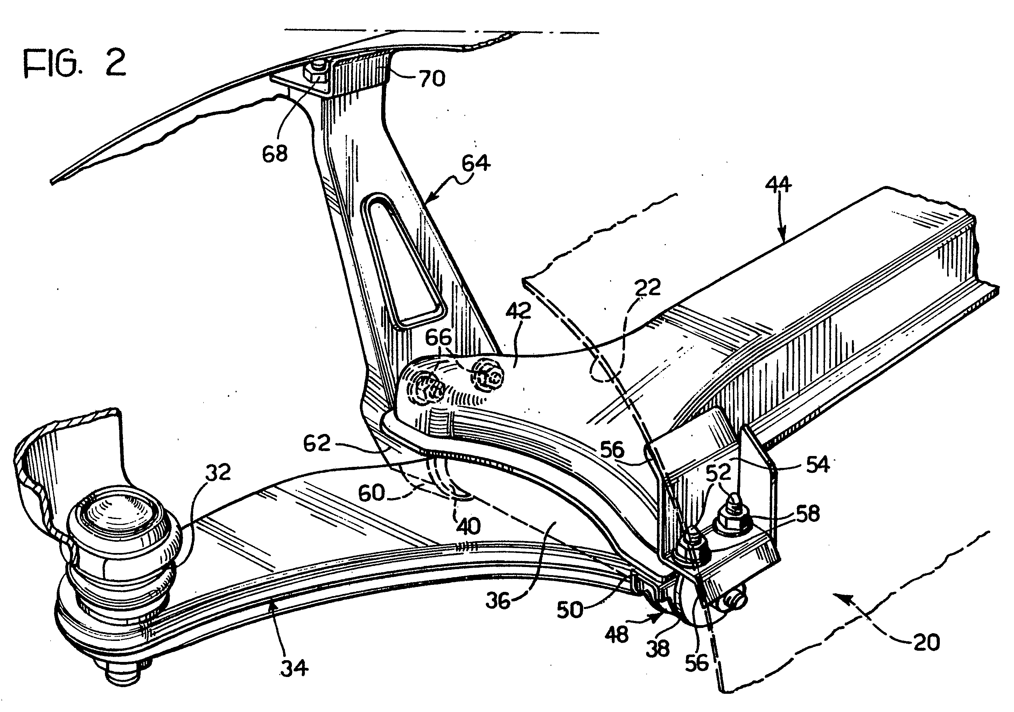

The cross member 44, which, as is illustrated in detail in Figure 2 is constituted by a pressed metal member with an open section, is fixed at its centre in a manner known *per se* to the front part of the body of the vehicle by means of bolts 46.

The fixing of the bushes 38, 40 to the head 42 of the cross member 44 will now be described.

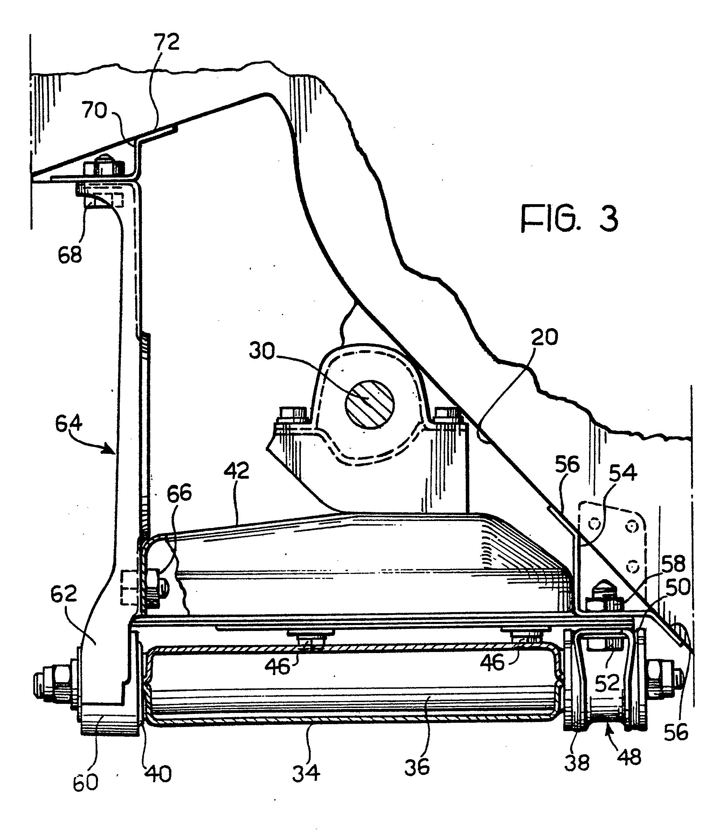

As is illustrated in detail in Figure 3, the bush 38, the inner surface of which is vulcanised onto the outer surface of the corresponding end of the pin 36, is inserted in a cradle-shaped bearing 48 provided with a pair of end flanges 50 each of which is traversed by a bolt 52. The bolts 52 pass through corresponding holes formed in the rear end of the head 42 of the cross member 44 and are connected to an attachment element 54 welded at 56 to the body 20 close to the lower end of the wheel arch 22. Locking nuts 58 are engaged on the ends of the bolts 52 in order to clamp together the bearing 48, the head 42 and the attachment element 54. From what has been stated above, it is seen that the bearing 48 carrying the bush 38 is fixed to the attachment element 54 which is fixed to the body 20 by means of the same bolts 52 which fix this bearing 48 to the cross member 44.

Again referring to Figure 3, the bush 40, which is also vulcanised onto the outer surface of the corresponding end of the pin 36, is inserted within a bearing 60 in the form of a metal ring which is welded to a fork-shaped end part 62 formed at the lower end of a substantially-vertical arm 64. This lower end of the arm 64 is fixed by bolts 66 to the front end of the head 42 of the cross member 44. The upper end of the arm 64 is fixed by bolts 68 to an attachment element 70 fixed by welding at 72 to the body 20.

From what has been said previously, it is clear that the bearing 48 and the bearing 60 with the arm 64 which fix the two bushes 38 and 40 to the head 42 of the cross member 44, are rigidly connected also to the body 20 of the vehicle. In this manner the stresses transmitted to these bearings during driving of the vehicle, are passed partly to the body 20 of the vehicle itself and partly to the cross member 44 by means of a force which acts in the plane of the cross member itself. This allows the use of a cross member 44 having an open section and which is thus particularly light, simple and economic.

## Claims

1. A motor vehicle provided with independent suspension means for its front wheels, including:

— a cross member (44) fixed at its centre to the front part of the body (20) of the vehicle and provided with an enlarged head (42) at each of its ends,

— a pair of bearings (48, 60) fixed to each head (42) by fixing means, each bearing carrying a bush (38, 40) and the two bushes of each pair of bearings being aligned along an axis parallel to the longitudinal axis of the vehicle,

— an arm (34) articulated on each head (42) of the cross member by means of a pin (36) inserted in the corresponding pair of bushes (38, 40),

— a pair of resilient, telescopic legs (16) each of which incorporates a shock absorber, each leg being anchored at its upper end to the vehicle body (20) and carrying at its lower end a support (14) for the associated wheel (10), this wheel support (14) being connected by means of a ball joint (32) to the arm (34) which is articulated on the corresponding head (42) of the cross member (44),

characterised in that each bearing (48, 60) of said two pairs of bearings is also fixed to the body (20) of the vehicle.

2. A motor vehicle according to Claim 1, characterised in that a first bearing (48) of each pair of bearings (48, 60) is fixed to an attachment element (54) welded to the body (20) close to the lower end of the wheel arch (22), the fixing of the first bearing (48) to the attachment element (54) being effected by the same fixing means (52) as are used to fix this bearing (48) to the head (42) of the cross member (44).

3. A motor vehicle according to Claim 2, characterised in that the first bearing (48) is of a form adapted to receive the associated bush (38) and is provided with flanges (50) for its fixing by means of bolts and nuts (52, 58) to the associated attachment element (54).

4. A motor vehicle according to Claims 1 and 2, characterised in that the second bearing (60) of each pair of bearings (48, 60) has an extension in the form of a substantially-vertical arm (64) fixed at its upper end to an attachment element (70) welded to the body (20).

5. A motor vehicle according to Claim 4, characterised in that the second bearing includes an annulus (60) containing the associated bush (40), the said annulus (60) being welded to a lower, forked-shaped end part (62) of the said vertical arm (64).

## Revendications

1. Véhicule à moteur à suspensions indépendantes pour ses roues avant, comprenant:

— une traverse (44) fixée en son centre à la partie avant du corps (20) du véhicule et ayant une tête élargie (42) à chacune de ses extrémités,

— une paire de paliers (48, 60) fixée à chaque tête (42) par un dispositif de fixation, chaque palier comprenant un coussinet (38, 40), les deux coussinets de chaque paire de paliers étant alignés sur un axe parallèle à l'axe longitudinal du véhicule,

— un bras (34) articulé sur chaque tête (42) de la traverse autour d'un axe (36) pénétrant dans la paire correspondante de coussinets (38, 40),

— deux branches télescopiques élastiques (16) comprenant chacune un amortisseur, chaque branche étant ancrée à son extrémité supérieure au châssis du véhicule (20) et portant, à son extrémité inférieure, un support (14) de la roue associée (10), ce support de roue (14) étant raccordé par une rotule (32) au bras (34) qui est articulé sur la tête correspondante (42) de la traverse (44),

caractérisé en ce que chaque palier (48, 60) des deux paires de paliers est aussi fixé au châssis (20) du véhicule.

2. Véhicule à moteur selon la revendication 1, caractérisé en ce qu'un premier palier (48) de chaque paire de paliers (48, 60) est fixé à un élément de fixation (54) soudé au châssis (20) près de l'extrémité inférieure de l'arceau (22), la fixation du premier palier (48) à l'élément de fixation (54) étant réalisée par le dispositif de fixation (52) déjà utilisé pour la fixation de ce palier (48) à la tête (42) de la traverse (44).

3. Véhicule à moteur selon la revendication 2, caractérisé en ce que le premier palier (48) est sous une forme adaptée au logement du coussinet associé (38) et à des flasques (50) permettant sa fixation par des boulons et des écrous (52, 58) à l'élément associé de fixation (54).

4. Véhicule à moteur selon l'une des revendications 1 et 2, caractérisé en ce que le second palier (60) de chaque paire de paliers (48, 60) a un prolongement sous forme d'un bras sensiblement vertical (64) fixé à son extrémité supérieure à un élément de fixation (70) soudé au corps (20).

5. Véhicule à moteur selon la revendication 4, caractérisé en ce que le second palier comporte un anneau (60) contenant un coussinet associé (40), cet anneau (60) étant soudé à une partie inférieure fourchue d'extrémité (62) du bras vertical (64).

**Patentansprüche**

1. Kraftfahrzeug mit unabhängiger Vorderradaufhängung

— mit einem Querträger (44), der in seinem Zentrum an dem Vorderteil des Fahrzeugkörpers (20) befestigt und an seinen beiden Enden mit verbreiterten Kopfteilen (42) versehen ist,

— mit jeweils einem Paar von Lagern (48, 60) an jedem der genannten Kopfteile (42), die dort mit Hilfe von Befestigungsmitteln fixiert sind, wobei jedes Lager eine Buchse (38 bzw. 40) umfaßt und die beiden Buchsen eines Lagerpaares in Richtung einer parallel zur Längsachse des Fahrzeuges verlaufenden Achse miteinander fluchten,

— mit jeweils einem Querlenker (34) an jedem Kopfteil (42) des Querträgers (44), der an diesem mittels eines in das betreffende Buchsenpaar (38, 40) eingesetzten Bolzens (36) angelenkt ist,

— mit zwei teleskopischen Federbeinen (16), die jeweils einen Schwingungsdämpfer umfassen und mit ihren oberen Enden an dem Fahrzeugkörper (20) verankert sind und an ihrem unteren Ende ein Radlager (14) für das zugeordnete Rad (10) tragen, wobei dieses Radlager (14) mit Hilfe eines Kugelgelenks (32) mit demjenigen Querlenker (34) verbunden ist, der an dem zugeordneten Kopfteil (42) des Querträgers (44) angelenkt ist,

dadurch gekennzeichnet, daß jedes der paarweise an den Kopfteilen (42) des Querträgers (44) befestigten Lager (48, 60) außerdem an dem Fahrzeugkörper (20) fixiert ist.

2. Kraftfahrzeug nach Anspruch 1, dadurch gekennzeichnet, daß ein erstes Lager (48) jedes Lagerpaares (48, 60) an einem Befestigungselement (54) fixiert ist, welches mit dem Fahrzeugkörper (20) in der Nähe des unteren Endes des Radbogens (22) verschweißt ist, wobei die Fixierung des ersten Lagers (48) an dem Befestigungselement (54) durch dieselben Fixiermittel (52) erfolgt, die auch zur Befestigung dieses Lagers (48) an dem Kopfteil (42) des Querträgers (44) dienen.

3. Kraftfahrzeug nach Anspruch 2, dadurch gekennzeichnet, daß das erste Lager (48) eine die Aufnahme der zugeordneten Buchse (38) ermöglichende Form besitzt und Flansche (50) aufweist, mittels derer es durch Bolzen und Muttern (52, 58) an dem zugeordneten Befestigungselement (54) fixierbar ist.

4. Kraftfahrzeug nach Anspruch 1 und 2, dadurch gekennzeichnet, daß das zweite Lager (60) jedes Lagerpaares (48, 60) einen Ansatz in Form eines im wesentlichen vertikalen Armes (64) aufweist, der mit seinem oberen Ende an einem an dem Fahrzeugkörper (20) angeschweißten Befestigungselement (70) fixiert ist.

5. Kraftfahrzeug nach Anspruch 4, dadurch gekennzeichnet, daß das zweite Lager ein die zugeordnete Buchse (40) beinhaltendes Auge (60) umfaßt, welches an dem unteren gabelförmigen Endteil (62) des genannten vertikalen Armes (64) angeschweißt ist.

FIG. 1

0 036 845

FIG. 2

70

68

64

44

22

42

66

56

62

32

54

52

60

58

40

36

50

34

48

38

56

20

2

0036845

FIG. 3